# EUROPÄISCHE PATENTANMELDUNG

(11) **EP 0 927 665 A1**
(43) Veröffentlichungstag der Anmeldung: **07.07.1999**
(21) Anmeldenummer: 98121173.3
(22) Anmeldetag: 12.11.1998
(51) Int. Cl.: B60R 11/02

(54) **Bildschirmarbeitsplatz in einem Flugzeug**

(30) Priorität: 06.12.1997 DE 19754224
(71) Anmelder: Volkswagen Aktiengesellschaft, 38436 Wolfsburg (DE)
(72) Erfinder: Bergholz, Ralf, Dr., 38108 Braunschweig (DE); Sander, Günther, 38442 Wolfsburg (DE); Engel, Thomas, 38467 Bergfeld (DE); Oberschachtsiek, Andrè, Dipl.-Ing., 38518 Gifhorn (DE)

(57) **Zusammenfassung**

Die Erfindung betrifft einen Bildschirmarbeitsplatz (1) in einem Fahrzeug, der wenigstens eine Rechnereinheit (7), eine Tastatur (20) und einen flachen, klappbaren Bildschirm (10) umfaßt. Im Fahrzeug ist eine klappbare Armlehne (6) enthalten, die von einer etwa waagrechten Gebrauchsstellung (33) in eine etwa senkrechte Nichtgebrauchsstellung wegklappbar ist. Erfindungsgemäß ist der Bildschirm (10) an der Armlehne (6) klappbar befestigt, so daß er einerseits in der Gebrauchsstellung (33) der Armlehne (6) in eine Arbeitsposition (35) in den Sichtbereich eines Benutzers aufklappbar ist und andererseits in eine Ruheposition (36) auf die Oberseite (17) oder in eine entsprechende Aussparung an der Oberseite der Armlehne (6) klappbar ist. In dieser Ruheposition (36) ist der Bildschirm (10) zusammen mit der Armlehne (6) in deren Nichtgebrauchsstellung wegklappbar. Ein derartiger Bildschirmarbeitsplatz (1) ist platzsparend, kostengünstig, sicherheitstechnisch unkritisch und gut benutzbar.

## Beschreibung

Die Erfindung betrifft einen Bildschirmarbeitsplatz in einem Fahrzeug nach dem Oberbegriff des Anspruchs 1.

Es ist bekannt, die Funktion von Kraftfahrzeugen durch den Einbau von EDV-Anlagen zu erweitern. Dazu sind bereits eine Mehrzahl von Anordnungen und Halterungen zur Ausbildung eines Bildschirmarbeitsplatzes bekannt.

Mit einem bekannten Einbausystem soll vorzugsweise eine Großraumlimousine in ein rollendes Büro aufrüstbar sein (DE 297 00 373 U1), wobei ein Funktionsblock an einem Sitzgestell angelenkt ist und in Schubladenkästen des Funktionsblocks ein Notebook und ein Drucker enthalten sind. Eine solche Anordnung erfordert relativ viel Platz und ist für übliche Personenkraftwagen daher nicht geeignet.

Es sind auch gattungsgemäße, wenig Platz benötigende und für Personenkraftwagen geeignetere Bildschirmarbeitsplatzanordnungen bekannt: in einer Ausführungsform ist eine Tastatur und ein flacher klappbarer Bildschirm über eine Schiebeführung im Handschuhfach eines Fahrzeugs verstaubar und bei herausgeklapptem Handschuhfachdeckel in eine Benutzungsposition bringbar. Alternativ dazu kann zur Ausbildung eines Bildschirmarbeitsplatzes im Fahrzeugfond ein Notebook mit einer Tastatur und einem Bildschirm über eine Halterung an Kopfstützhalterungen eines Frontsitzes eingehängt werden (DE 41 09 497 C1).

In einer weiteren Ausführungsform kann ein Notebook über eine Halterung am Lenkrad befestigt werden (DE 42 33 889 A1). Zudem ist es bekannt, einen Funktionsblock, der unter anderem ein Notebook enthalten kann, mit Hilfe einer Stütze und eines Fahrzeugsicherheitsgurts auf einem Sitzplatz zu befestigen (DE 196 16 250 A1).

Alle vorstehenden Lösungen zum Aufbau eines Bildschirmarbeitsplatzes in einem Fahrzeug haben den Nachteil, daß erhebliche Behinderungen in Kauf genommen werden, wie beispielsweise der Wegfall eines Sitzplatzes, die Blockierung des Lenkrads ohne Fahrbetriebsmöglichkeit, oder daß sicherheitstechnisch bedenkliche Anordnungen vorgeschlagen sind, wie starre Halterungen in einem Aufschlagbereich eines Bildschirmarbeitsplatzbenutzers bei einer Fahrzeugkollision. Zudem sind nur geringe Anpassungen der Bildschirmpositionen an unterschiedliche Blickwinkel und Sitzpositionen von Benutzern möglich.

Weiter ist es bekannt, ein Faxgerät in einer Armlehne mit Hilfe einer Schwenklagerung oder eines Scherenmechanismus versenkbar anzuordnen (DE 42 25 673 A1). Bildschirme für Bildschirmarbeitsplätze sind relativ groß und in einer üblichen Armlehne für Personenkraftwagen kaum versenkbar unterzubringen, wobei wegen der erforderlichen Klappungen und Sichtkontakteinstellungen eines Bildschirms eine Absenkmechanik kompliziert und aufwendig aufgebaut sein müßte, wie dies beispielsweise in Verbindung mit Flugzeugsitzarmlehnen und kleinen Fernsehbildschirmen bereits bekannt ist (US-PS 5,076,524).

Aufgabe der Erfindung ist es, demgegenüber einen gattungsgemäßen Bildschirmarbeitsplatz so weiterzubilden, daß dessen Anordnung platzsparend, kostengünstig, sicherheitstechnisch unkritisch und gut benutzbar ist.

Diese Aufgabe wird mit den Merkmalen des Anspruchs 1 gelöst.

Gemäß Anspruch 1 ist der Bildschirm an der Armlehne klappbar befestigt, dergestalt, daß er einerseits in der Gebrauchsstellung der Armlehne in eine Arbeitsposition in den Sichtbereich eines Benutzers aufklappbar ist und daß er andererseits in eine Ruheposition auf die Oberseite oder in eine entsprechende Aussparung an der Oberseite der Armlehne klappbar ist und in dieser Ruheposition zusammen mit der Armlehne in der Nichtgebrauchsstellung wegklappbar ist.

Vorteilhaft wird hier die ohnehin übliche und einfach aufgebaute Klappmechanik des Bildschirms verwendet, um diesen in Verbindung mit einer klappbaren Armlehne von einer Arbeitsposition im Sichtbereich des Benutzers in eine Ruheposition wegzuklappen. Über den Klappmechanismus kann der Bildschirm in eine geeignete Sichtposition eingestellt werden. Die Anordnung an einer Armlehne ist sicherheitstechnisch unkritisch, da dies üblicherweise kein direkter Aufschlagbereich für einen Insassen bei einer Fahrzeugkollision ist. In der Ruheposition ist der Bildschirm bei hochgeklappter Armlehne ohnehin völlig in der Lehnenfläche verstaut.

In einer besonders bevorzugten Ausführungsform weist die Armlehne eine Maulöffnung auf, in der ein Halteteil mit einem klappbar befestigten Bildschirm durch Klemmschluß gehalten ist. Durch eine Verschiebung und ggf. eine Verdrehung des Halteteils in der Maulöffnung ergeben sich in Verbindung mit unterschiedlichen Klappstellungen viele Einstellmöglichkeiten zur Anpassung der Bildschirmstellung an die Blickposition eines Benutzers. Eine solche Anordnung ist zudem einfach und kostengünstig herstellbar. Zweckmäßig wird dabei der Bildschirm auf einen oberen U-Schenkel einer Maulöffnung in seiner Ruheposition geklappt, wodurch dann die Armlehne insgesamt unbehindert nach oben wegklappbar ist.

Besonders vorteilhaft wird ein Bildschirmarbeitsplatz an einem Rücksitzplatz eines Personenkraftwagens angeordnet, wo ein Benutzer relativ viel Platz hat und auch während der Fahrt als Fahrgast weitgehend ungestört arbeiten kann. Bei einer solchen Anordnung ist dann die Armlehne als Tragteil für den Bildschirm eine in eine Ausnehmung einer Rückenlehne einer Fondsitzbank einklappbare Fondarmlehne. Die Rechnereinheit kann dabei vorzugsweise hinter dieser Rückenlehne im Kofferraum angebracht sein und über ein Verbindungskabel mit dem Bildschirm verbunden sein. Weiter wird bevorzugt eine kabellose Tastatur verwendet, die über eine Sender/Empfängeranordnung mit der Rechnereinheit Verbindung hat. Im Fahrzeuginnenraum wird somit nur für den Bildschirm und die Tastatur Platz benötigt, so daß durch den Bildschirmarbeitsplatz im Fahrzeuginnenraum keine Behinderung auftritt. Besonders vorteilhaft wird die Ausnehmung zur Aufnahme der hochgeklappten Armlehne zum Kofferraum hin durchgehend ausgebildet, so daß in der Gebrauchsstellung der Armlehne auf die dahinter angeordnete Rechnereinheit ggf. mit Zusatzteilen zu Bedienzwecken, z. B. zum Einlegen von Disketten, etc. ein Durchgriff geschaffen ist.

Auf dem Markt sind bereits sogenannte Laptopcomputer bzw. Notebooks als Kompaktgeräte erhältlich, deren Bildschirm abnehmbar ist. Solche Notebooks eignen sich in Verbindung mit einer kabellosen Zusatztastatur besonders für die vorstehend beschriebene Anordnung, wobei ein solches Notebook vorzugsweise herausnehmbar, insbesondere ausklappbar in einem fest im Kofferraum hinter der Rückenlehne angeordneten Gehäuse aufgenommen ist.

Für die Anordnung einer Rechnereinheit, insbesondere eines Notebooks im Kofferraum mit einer Durchgriffmöglichkeit durch eine Armlehnenausnehmung in Verbindung mit über Kabel oder kabellos angeschlossenem Bildschirm und Tastatur im Fahrzeuginnenraum wird unabhängig von der Halterung des Bildschirms Elementenschutz beantragt.

In einer Weiterbildung des Bildschirmarbeitsplatzes wird vorgeschlagen, unter einer Hutablage des Fahrzeugs wenigstens einen an die Rechnereinheit angeschlossenen Drucker und/oder einen Scanner anzuordnen, wobei jeweils ein zugeordneter Papiereinzugschlitz und/oder Papierauswurfschlitz in der Hutablage im Fahrzeuginnenraum angebracht ist. Für die Anordnung eines solchen Papiereinzugs und Papierauswurfs in der Hutablage im Fahrzeuginnenraum wird unabhängig von der Anordnung der weiteren Bestandteile des Bildschirmarbeitsplatzes Elementenschutz beantragt.

Durch die Anordnung des Druckers und/oder des Scanners und ggf. eines mit der Rechnereinheit verbundenen Lautsprechers unmittelbar unter der Hutablage wird die Benutzung des Kofferraums nur wenig beeinträchtigt, da der Kofferraumboden insgesamt für die Beladung freigehalten ist.

Anhand einer Zeichnung wird die Erfindung näher erläutert.

Es zeigen:
- Fig. 1: eine schematische Perspektivansicht eines Bildschirmarbeitsplatzes im Fondbereich eines Kraftfahrzeugs,
- Fig. 2: eine schematische Darstellung eines an einer Armlehne klappbar gehaltenen Bildschirms in Arbeitsposition,
- Fig. 3: eine schematische Darstellung eines an einer Armlehne klappbar gehaltenen Bildschirms in Ruheposition,
- Fig. 4: eine schematische Darstellung einer im Kofferraum eines Kraftfahrzeugs angeordneten Rechnereinheit, und

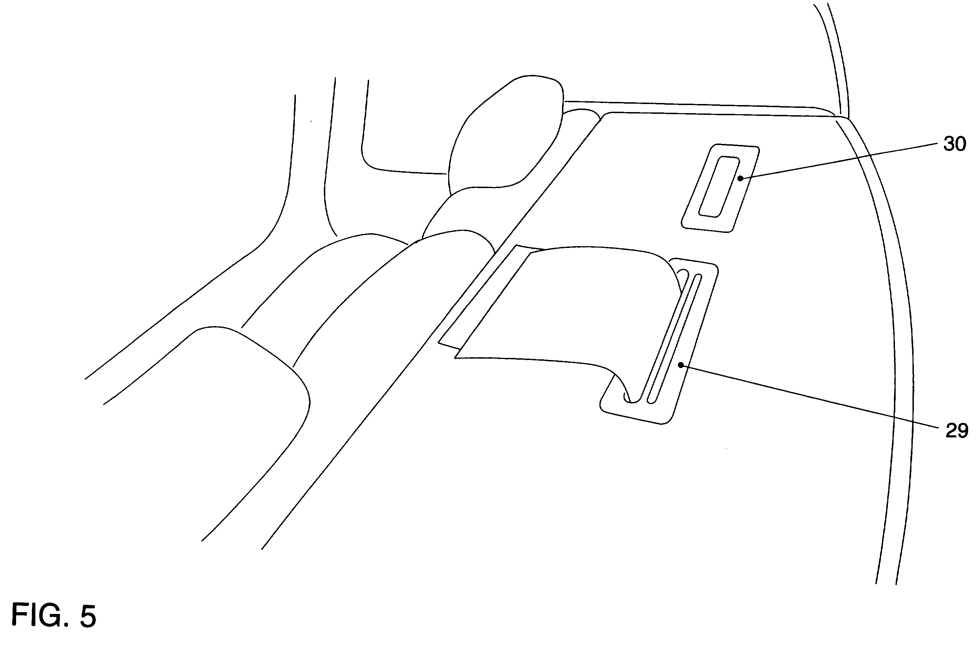

- Fig. 5: eine schematische Darstellung eines Papierauswurf- und/oder Papiereinzugschlitzes in der Hutablage eines Kraftfahrzeugs.

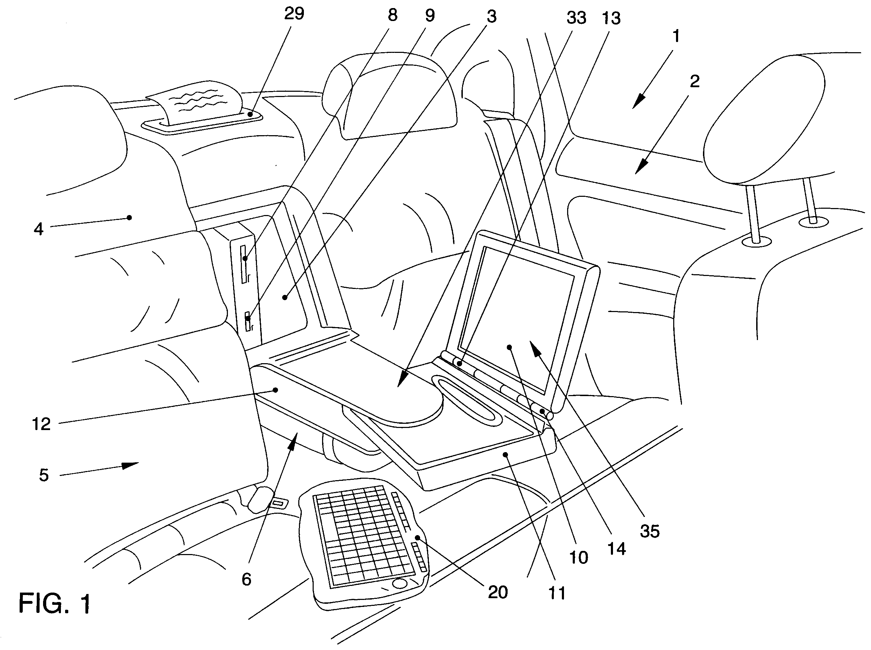

In der Fig. 1 ist schematisch ein Bildschirmarbeitsplatz 1 im Fondbereich 2 eines Kraftfahrzeugs dargestellt. In diesem Fondbereich 2 ist eine Fondsitzbank 5 mit einer Rückenlehne 4 angeordnet, in der eine Ausnehmung 3 für eine Fondarmlehne 6 ausgebildet ist. In der Darstellung der Fig. 1 ist diese Fondarmlehne 6 in eine Gebrauchsstellung 33 ausgeklappt.

Durch die Ausnehmung 3 hindurch ist bei ausgeklappter Fondarmlehne 6 hier ein Notebook 7 als Rechnereinheit mit integriertem CD-ROM-Laufwerk 8 und Diskettenlaufwerk 9 bedienbar. Es wird an dieser Stelle darauf hingewiesen, daß der Begriff Notebook im weitesten Sinne als tragbarer Rechner bzw. Rechnerbestandteil zu verstehen ist. Dazu würden beispielsweise auch sogenannte "handheld PC", "PDA" etc. gehören. Das Notebook 7 umfaßt einen flachen, klappbaren und abnehmbaren Bildschirm 10, der in der Darstellung der Fig. 1 bereits abgenommen und über ein quaderförmiges Halteteil 11 an der Fondarmlehne 6 klappbar befestigt ist. Zu dieser klappbaren Befestigung sind an einer Längskante 19 des Halteteils 11 Scharniere 13, 14 angebracht.

Wie dies aus den Fig. 1 bis 3 ersichtlich ist, weist die Fondarmlehne 6 eine Maulöffnung 12 auf, die durch einen in der Gebrauchsstellung 33 der Fondarmlehne 6 unteren, trägerförmigen U-Schenkel 15 und einem darüber liegenden, dünneren, plattenförmigen U-Schenkel 16 gebildet ist. In dieser Maulöffnung 12 ist das Halteteil 11 durch Klemmschluß gehalten, wobei das Halteteil 11 von einem Bediener jederzeit in eine optimale Bedienposition verschiebbar und verdrehbar ist.

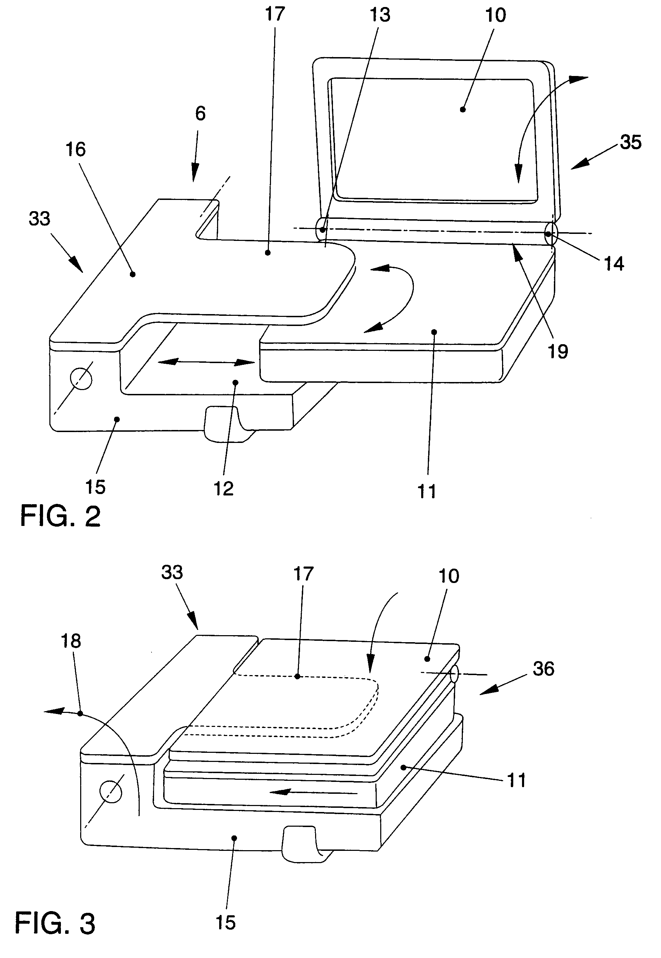

In den Fig. 1 und 2 ist der Bildschirm 10 jeweils in seine Arbeitsposition 35 hochgeklappt, während er in der Fig. 3 in seiner Ruheposition 36 auf die Oberseite 17 des oberen U-Schenkels 16 geklappt ist. Wie dies der Fig. 3 weiter entnommen werden kann, weist das Halteteil 11 eine Höhe entsprechend der Maulweite und eine Seitenlänge entsprechend der Fondarmlehnenbreite auf. Dadurch füllt das Halteteil 11 im in die Maulöffnung 12 eingeschobenen Zustand diese vollständig aus, so daß die Fondarmlehne 6, wie dies mit dem Pfeil 18 angedeutet ist, in die Ausnehmung 3 der Rückenlehne 4 einklappbar ist.

Alternativ zur Notebookaufnahme im Kofferraum ist je nach Baugröße des Fahrzeuges und des Rechners auch eine Notebookablage durch die Rücksitzbanköffnung möglich.

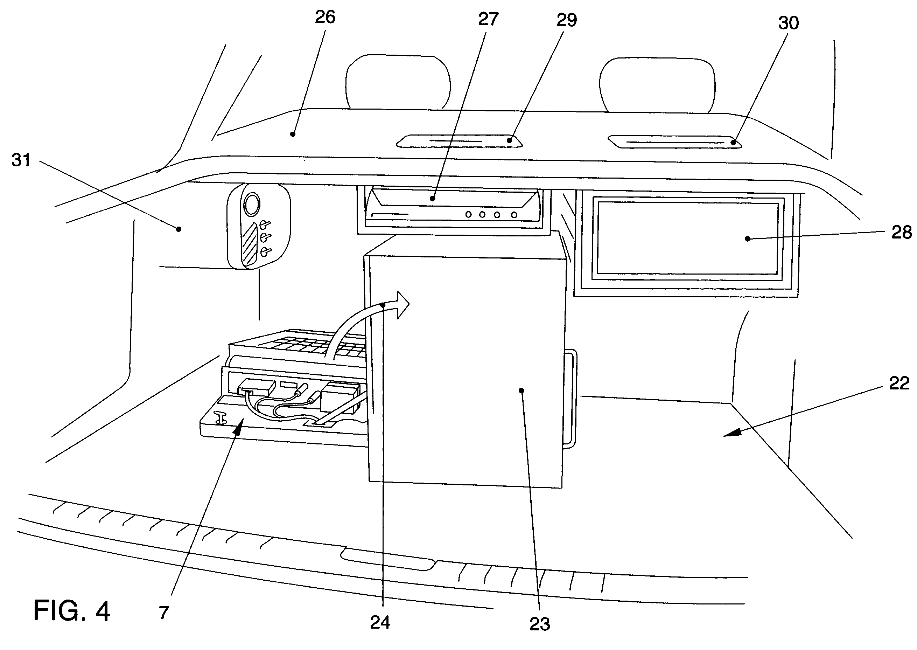

In der Fig. 4 ist eine schematische Darstellung eines Kofferraums 22 ohne Kofferraumdeckel dargestellt. In diesem Kofferraum 22 ist ein zur Ausnehmung 3 in der Rückenlehne 4 hin offenes Gehäuse 23 angeordnet, in das das Notebook 7, wie dies durch den Pfeil 24 angedeutet ist, einklappbar ist. Das Notebook 7 ist über ein Verbindungskabel und/oder eine Sender/Empfängeranordnung, die hier nicht dargestellt sind, mit dem Bildschirm 10 verbunden. Als Tastatur kann eine auf herkömmliche Weise mit dem Notebook 7 verbundene Tastatur und/oder, wie in der Fig. 1 dargestellt, eine Tastatur 20 dienen, die kabellos über eine Sender-/Empfängeranordnung mit dem Notebook 7 Verbindung hat.

Wie dies der Fig. 4 weiter zu entnehmen ist, sind unter einer Hutablage 26 ein Drucker 27 und ein Scanner 28 angeordnet, die jeweils an das Notebook 7 angeschlossen sind. Dem Drucker 27 und dem Scanner 28 ist in der Hutablage 26 im Fahrzeuginnenraum jeweils ein Papierauswurf- und/oder Papiereinzugschlitz 29, 30 zugeordnet, die durch die Hutablage 26 geführt sind und in Fahrzeugquerrichtung verlaufen.

Weiter ist unter der Hutablage 26 ein mit dem Notebook 7 verbundener Lautsprecher 31 montiert.

## Patentansprüche

1. Bildschirmarbeitsplatz in einem Fahrzeug,
wobei der Bildschirmarbeitsplatz wenigstens eine Rechnereinheit, eine Tastatur und einen flachen, klappbaren Bildschirm umfaßt, und
im Fahrzeug eine klappbare Armlehne enthalten ist, die von einer etwa waagrechten Gebrauchsstellung in eine etwa senkrechte Nichtgebrauchsstellung wegklappbar ist,
dadurch gekennzeichnet,
daß der Bildschirm (10) an der Armlehne (6) klappbar befestigt ist, dergestalt, daß er einerseits in der Gebrauchsstellung (33) der Armlehne (6) in eine Arbeitsposition (35) in den Sichtbereich eines Benutzers aufklappbar ist und daß er andererseits in eine Ruheposition (36) auf die Oberseite (17) oder in eine entsprechende Aussparung an der Oberseite der Armlehne (6) klappbar ist und in dieser Ruheposition (36) zusammen mit der Armlehne (6) in deren Nichtgebrauchsstellung wegklappbar ist.

2. Bildschirmarbeitsplatz nach Anspruch 1, dadurch gekennzeichnet, daß der Bildschirm (10) über ein Halteteil (11) an der Armlehne (6) befestigt ist, wobei das Halteteil (11) in einer Maulöffnung (12) der Armlehne (6) verschiebbar und/oder verdrehbar durch einen Klemmschluß gehalten ist und der Bildschirm (10) mit dem Halteteil (11) über Scharniere (13, 14) klappbar verbunden ist.

3. Bildschirmarbeitsplatz nach Anspruch 2, dadurch gekennzeichnet,
daß die Maulöffnung (12) an der Armlehne (6) durch eine U-förmige Ausbildung der Armlehne (6) hergestellt ist, dergestalt, daß zwischen einem in der Gebrauchsstellung (33) der Armlehne (6) unteren, trägerförmigen U-Schenkel (15) und einem darüberliegenden, bevorzugt dünneren, plattenförmigen U-Schenkel (16) das Halteteil (11) durch Klemmschluß im U-Bereich verschiebbar und verdrehbar gehalten ist,
daß das Halteteil (11) quaderförmig gestaltet ist mit einer Oberfläche entsprechend etwa der Bildschirmfläche, mit einer Höhe entsprechend der Maulweite und mit einer Seitenlänge etwa entsprechend der Armlehnenbreite, so daß das Halteteil (11) den Maulbereich ausfüllend ganz einschiebbar ist, und
daß die Scharniere (13, 14) an der Längskante (19) der dem oberen U-Schenkel (16) zugewandten Oberseite des Halteteils (11) angeordnet sind, so daß der Bildschirm (10) in seine Ruheposition (36) auf den plattenförmig oberen U-Schenkel (16) klappbar ist, der dann zwischen dem Halteteil (11) und dem Bildschirm (10) liegt.

4. Bildschirmarbeitsplatz insbesondere nach einem der Ansprüche 1 bis 3, dadurch gekennzeichnet,
daß die Armlehne (6) als Tragteil für den Bildschirm (10) eine in eine Ausnehmung (3) einer Rückenlehne (4) einer Fondsitzbank (5) einklappbare Fondarmlehne (6) ist,
daß die Rechnereinheit (7) im Kofferraum (22) hinter dieser Rückenlehne (4) angebracht ist und über ein Verbindungskabel und/oder eine Sender/Empfängeranordnung mit dem Bildschirm (10) verbunden ist, und
daß die Tastatur (20) im Fahrzeuginnenraum enthalten ist und bevorzugt kabellos über eine Sender/Empfängeranordnung mit der Rechnereinheit Verbindung hat.

5. Bildschirmarbeitsplatz nach Anspruch 4, dadurch gekennzeichnet, daß die Ausnehmung (3) zum Kofferraum (22) durchgehend ausgebildet ist, so daß in der Gebrauchsstellung (33) der Armlehne (6) ein Durchgriff auf eine unmittelbar dahinter im Kofferraum (22) angeordnete Rechnereinheit und gegebenenfalls deren Zusatzteile für deren Bedienung hergestellt ist.

6. Bildschirmarbeitsplatz nach Anspruch 5, dadurch gekennzeichnet, daß die Rechnereinheit (7) ein Notebook mit integrierten, durch die Ausnehmung (3) hindurch bedienbaren Laufwerken (8, 9) und einem abnehmbaren Bildschirm (10) ist und der abgenommene Bildschirm (10) mit dem Halteteil (11) verbunden ist.

7. Bildschirmarbeitsplatz nach einem der Ansprüche 4 bis 6, dadurch gekennzeichnet, daß die Rechnereinheit (7) herausnehmbar, insbesondere ausklappbar in einem fest im Kofferraum (22) anschließend an die Rückenlehne (4) angeordneten, gegebenenfalls zur Ausnehmung (3) in der Rückenlehne (4) hin offenen Gehäuse (23) aufgenommen ist.

8. Bildschirmarbeitsplatz insbesondere nach einem der Ansprüche 1 bis 7, dadurch gekennzeichnet, daß als weiterer Bestandteil des Bildschirmarbeitsplatzes (1) unter einer Hutablage (26) des Fahrzeugs wenigstens ein an die Rechnereinheit (7) angeschlossener Drucker (27) und/oder wenigstens ein Scanner (28) angeordnet sind mit jeweils einem Papierauswurf- und/oder einem Papiereinzugschlitz (29, 30) in der Hutablage (26) im Fahrzeuginnenraum.

9. Bildschirmarbeitsplatz nach Anspruch 8, dadurch gekennzeichnet, daß der Drucker (27) und/oder Scanner (28) im Kofferraum (22) des Fahrzeugs in gegebenenfalls in Fahrzeugquerrichtung nebeneinander liegenden Halterungen unter der Hutablage (26) eingeschoben sind, dergestalt, daß je ein zugeordneter Papierauswurf- und/oder Papiereinzugschlitz (29, 30) durch die Hutablage (26) geführt ist und bevorzugt in Fahrzeugquerrichtung verläuft.

10. Bildschirmarbeitsplatz nach einem der Ansprüche 1 bis 9, dadurch gekennzeichnet, daß unter einer Hutablage (26) des Fahrzeugs ein mit der Rechnereinheit (7) verbundener Lautsprecher (31) montiert ist.
